(19) Europäisches Patentamt
European Patent Office
Office européen des brevets

(11) EP 4 628 948 A1

(12) **EUROPEAN PATENT APPLICATION**
published in accordance with Art. 153(4) EPC

(43) Date of publication:
**08.10.2025 Bulletin 2025/41**

(21) Application number: **23898191.4**

(22) Date of filing: **23.11.2023**

(51) International Patent Classification (IPC):
***G02B 5/30*** *(2006.01)* ***G02F 1/1335*** *(2006.01)*
***G02F 1/13363*** *(2006.01)*

(52) Cooperative Patent Classification (CPC):
**G02B 5/30; G02F 1/1335; G02F 1/13363**

(86) International application number:
**PCT/KR2023/018960**

(87) International publication number:
**WO 2024/117660 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.12.2022 KR 20220165909**

(71) Applicant: **SAMSUNG SDI CO., LTD.**
**Yongin-si, Gyeonggi-do 17084 (KR)**

(72) Inventors:
- **JOUNG, Hyeon Im**
  **Suwon-si Gyeonggi-do 16678 (KR)**
- **SHIN, Seung Mi**
  **Suwon-si Gyeonggi-do 16678 (KR)**
- **LEE, Beom Deok**
  **Suwon-si Gyeonggi-do 16678 (KR)**
- **HONG, Wan Taek**
  **Suwon-si Gyeonggi-do 16678 (KR)**
- **LEE, Seong Hoon**
  **Suwon-si Gyeonggi-do 16678 (KR)**

(74) Representative: **Michalski Hüttermann & Partner Patentanwälte mbB**
**Kaistraße 16A**
**40221 Düsseldorf (DE)**

(54) **POLARIZING PLATE AND OPTICAL DISPLAY DEVICE**

(57) Provided are a polarizing plate and an optical display device comprising same, the polarizing plate comprising: a polarizer and a phase retardation layer laminated on one surface of the polarizer, wherein the phase retardation layer has in-plane phase retardation of 0 nm to 10 nm and thickness-wise phase retardation of -30 nm to -3 nm at a wavelength of 550 nm, and, in the polarizing plate, the light transmittance ratio of equation 1 is greater than 0.445 and less than 0.470 and the light transmittance ratio of equation 2 is greater than 0.710 and less than 0.730.

【FIG. 2】

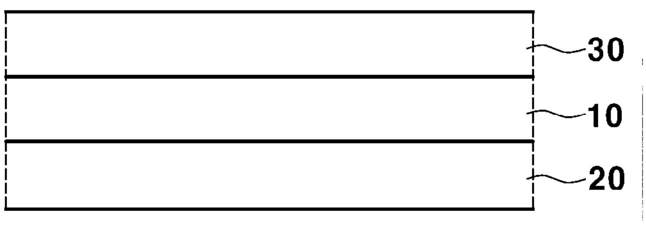


EP 4 628 948 A1

## Description

[Technical Field]

The present invention relates to a polarizing plate and an optical display device.

[Background Art]

A liquid crystal display may include a liquid crystal layer in which liquid crystals are aligned in a horizontal direction. For example, there are in-plane switching (IPS) or fringe field switching (FFS) mode liquid crystal displays. In a horizontal alignment-mode liquid crystal display, liquid crystals are horizontally aligned to be rotated in a plane so as to transmit or block light when two electrodes are driven at one side of a substrate, thereby improving viewing angle.

When there is pre-tilt in alignment of liquid crystals, the horizontal alignment-mode liquid crystal display is more likely to have anisotropy of color perception or visibility at right and left sides. As a result, visibility imbalance occurs between the right and left sides such that one side becomes a bluish region appearing blue and the other side becomes a yellowish region appearing yellow, thereby causing a difference in visibility or color perception between the right and left sides.

Currently, as technological development is underway to realize large screens, high resolution, and slim designs, there is a need for development of a polarizing plate that eliminates the difference in visibility at the right and left sides.

The background technique of the present invention is disclosed in JP Unexamined Patent Publication No. 2006-251659 and the like.

[Disclosure]

[Technical Problem]

It is one aspect of the present invention to provide a polarizing plate that improves visibility or color perception at right and left sides by reducing a difference in visibility or color perception between the right and right sides when applied to an optical display panel.

It is another aspect of the present invention to provide a polarizing plate that improves color uniformity when applied to an optical display panel.

It is a further aspect of the present invention to provide a polarizing plate that has the aforementioned effects even when a single retardation layer is formed on a lower surface of a polarizer.

[Technical Solution]

One aspect of the present invention relates to a polarizing plate.

1. The polarizing plate includes a polarizer; and a retardation layer stacked on one surface of the polarizer, wherein the retardation layer has an in-plane retardation of 0 nm to 10 nm and an out-of-plane retardation of -30 nm to -3 nm at a wavelength of 550 nm, and the polarizing plate has a light transmittance ratio of greater than 0.445 and less than 0.470, as calculated according to Equation 1, and a light transmittance ratio of greater than 0.710 and less than 0.730, as calculated according to Equation 2:

[Equation 1]

$$\text{Light transmittance ratio} = TS390/TS550$$

[Equation 2]

$$\text{Light transmittance ratio} = TS400/TS550$$

(in Equation 1 and Equation 2,

TS550 denotes a light transmittance (unit: %) of the polarizing plate at a wavelength of 550 nm,
TS390 denotes a light transmittance (unit: %) of the polarizing plate at a wavelength of 390 nm, and
TS400 denotes a light transmittance (unit: %) of the polarizing plate at a wavelength of 400 nm).

2. In 1, the polarizing plate may have a light transmittance of 10% to 20% at a wavelength of 390 nm and a light transmittance of 25% to 35% at a wavelength of 400 nm.

3. In 1 and 2, the polarizing plate may have a light transmittance ratio of greater than 0.795 and less than 0.805, as calculated according to Equation 3, and a light transmittance ratio of greater than 0.835 and less than 0.850, as calculated according to Equation 4.

[Equation 3]

$$\text{Light transmittance ratio} = TS410/TS550$$

[Equation 4]

$$\text{Light transmittance ratio} = TS420/TS550$$

(in Equation 3 and Equation 4,

TS550 denotes a light transmittance (unit: %) of the polarizing plate at a wavelength of 550 nm,
TS410 denotes a light transmittance (unit: %) of the polarizing plate at a wavelength of 410 nm, and
TS420 denotes light transmittance (unit: %) of the polarizing plate at a wavelength of 420 nm).

4. In 1 to 3, the polarizing plate may have a light transmittance of 33% to 35% at a wavelength of 410 nm and a light transmittance of 36% to 38% at a wavelength of 420 nm.

5. In 1 to 4, the retardation layer may be a negative C layer or a positive C layer.

6. In 1 to 5, the retardation layer may have a higher light transmittance at a wavelength of 390 nm, 400 nm, 410 nm, 420 nm, or 550 nm than the polarizer.

7. In 1 to 6, the retardation layer may have a light transmittance of 45% to 62% at a wavelength of 390 nm, a light transmittance of 70% to 90% at a wavelength of 400 nm, a light transmittance of 75% to 95% at a wavelength of 410 nm, and a light transmittance of 75% to 95% at a wavelength of 420 nm.

8. In 1 to 7, the retardation layer may include a film or coating layer containing a polymer with a positive inherent birefringence.

9. In 1 to 8, the retardation layer may include triacetylcellulose (TAC), cyclic olefin polymer (COP), or cyclic olefin copolymer (COC).

10. In 1 to 9, the retardation layer may have a thickness ratio of 90% or more with respect to a thickness of total retardation layers stacked on the lower surface of the polarizer.

11. In 1 to 10, a slow axis of the retardation layer may be tilted at an angle of -5° to 5° with respect to a light absorption axis of the polarizer, when the light absorption axis of the polarizer is 0°.

12. In 1 to 11, the polarizing plate may further include a second protective layer stacked on the other surface of the polarizer.

13. In 12, the second protective layer has an in-plane retardation of 3,000 nm or more at a wavelength of 550 nm.

Another aspect of the present invention relates to an optical display device.

The optical display device includes an optical stack according to the present invention.

[Advantageous Effects]

The present invention provides a polarizing plate that improves visibility or color perception at right and left sides by reducing a difference in visibility or color perception between the right and right sides when applied to an optical display panel.

The present invention provides a polarizing plate that improves color uniformity when applied to an optical display panel.

The present invention provides a polarizing plate that provides the aforementioned effects even when a single retardation layer is formed on a lower surface of a polarizer.

[Description of Drawings]

FIG. 1 is a graph depicting wavelength-dependent light transmittance of each polarizing plate according to an embodiment of the present invention (indicated by a solid line) and comparative embodiments (indicated by a dotted line or a dash-dotted line).

In FIG. 1, the X-axis represents wavelength (unit: nm) and the Y-axis represents a ratio of light transmittance at each wavelength on the X-axis to light transmittance at a wavelength of 550 nm.

FIG. 2 is a sectional view of a polarizing plate according to an embodiment of the present invention.

FIG. 3 is a picture showing an evaluation result of Example 1.

FIG. 4 is a picture showing an evaluation result of Comparative Example 1.

FIG. 5 shows color coordinates at 135° (left image) and 45° (right image) with an azimuth angle set to 60° in Example 2 and Comparative Example 1.

FIG. 6 shows color coordinates at 135° (left image) and 45° (right image) with an azimuth angle set to 45° in Example 2 and Comparative Example 1.

[Best Mode]

Hereinafter, exemplary embodiments of the present invention will be described in detail with reference to the accompanying drawings such that the present invention can be easily implemented by a person having ordinary knowledge in the art. It should be understood that the present invention may be embodied in different ways and is not limited to the following embodiments.

The terminology used herein is for the purpose of describing exemplary embodiments and is not intended to limit the present invention. As used herein, the singular forms "a", "an", and "the" are intended to include the plural forms as well, unless the context clearly indicates otherwise.

In the drawings, portions unrelated to description are omitted for clear description of the invention and like components will be denoted by like reference numerals throughout the specification. Although lengths, thicknesses or widths of various components may be exaggerated for understanding in the drawings, the present invention is not limited thereto.

Herein, spatially relative terms, such as "upper" and "lower", are defined with reference to the accompanying drawings. Thus, it will be understood that "upper surface" can be used interchangeably with "lower surface". In addition, when an element is referred to as being placed "on" another element, it may be directly placed on the other element, or intervening element(s) may be present. On the other hand, when an element is referred to as being placed or formed "directly on" another element, there are no intervening element(s) therebetween.

Herein, "in-plane retardation (Re)", "out-of-plane retardation (Rth)", and "degree of biaxiality (NZ)" are represented by Equations A, B and C, respectively:

[Equation A]

$$Re = (nx - ny) \times d$$

[Equation B]

$$Rth = ((nx + ny)/2 - nz) \times d$$

[Equation C]

$$NZ = (nx - nz)/(nx - ny)$$

where nx, ny, and nz are the indexes of refraction of an optical device, as measured in the slow axis direction, the fast axis direction and the thickness direction thereof at a measurement wavelength, respectively, and d is the thickness thereof (unit: nm). Herein, the in-plane retardation, the out-of-plane retardation, and the degree of biaxiality refer to values measured by transmitting light through the optical device in the normal direction relative to an in-plane direction of the optical device.

As used herein to represent an angle, "+" refers to the clockwise direction and "-" refers to the counterclockwise direction with respect to a reference (0°).

As used herein to represent a specific numerical range, "X to Y" means a value greater than or equal to X and less than or equal to Y.

The inventors of the present invention provide a polarizing plate that reduces a difference in visibility or color perception between the right and left sides when applied to an optical display panel, particularly a liquid crystal panel

adopting a horizontal alignment mode of liquid crystals. The horizontal alignment mode of the liquid crystals may be an IPS (in-plane switching) mode or an FFS (fringe field switching) mode.

A polarizing plate according to the present invention includes: a polarizer; and a retardation layer stacked on one surface of the polarizer, wherein (i) the retardation layer has an in-plane retardation of 0 nm to 10 nm and an out-of-plane retardation of -30 nm to -3 nm at a wavelength of 550 nm, (ii) the polarizing plate has a light transmittance ratio of greater than 0.445 and less than 0.470, as calculated according to Equation 1, and (iii) the polarizing plate has a light transmittance ratio of greater than 0.710 and less than 0.730, as calculated according to Equation 2:

[Equation 1]

$$\text{Light transmittance ratio} = TS390/TS550$$

[Equation 2]

$$\text{Light transmittance ratio} = TS400/TS550$$

(in Equation 1 and Equation 2,

TS550 denotes a light transmittance (unit: %) of the polarizing plate at a wavelength of 550 nm,
TS390 denotes a light transmittance (unit: %) of the polarizing plate at a wavelength of 390 nm, and
TS400 denotes a light transmittance (unit: %) of the polarizing plate at a wavelength of 400 nm).

Herein, the light transmittance of the polarizing plate refers to single light transmittance instead of crossed light transmittance and is measured at a specific wavelength, for example, 390 nm, 400 nm, 410 nm, 420 nm, or 550 nm by transmitting light from a retardation layer side toward the polarizer in the normal direction relative to the in-plane direction of the polarizing plate placed in a light transmittance meter, for example, a V-7100.

By simultaneously satisfying conditions (i), (ii) and (iii), the polarizing plate reduces a difference in visibility or color perception between the right and left sides, thereby improving color uniformity through improvement in visibility or color perception at the right and left sides, when applied to a horizontal alignment-mode optical display panel. If a polarizing plate does not satisfy any one of conditions (i), (ii), and (iii), the polarizing plate fails to achieve the effects of the present invention or can exhibit much lower effectiveness than the polarizing plate according to the present invention. In order to achieve improvement in color uniformity and in visibility or color perception at the right and left sides through reduction in visibility or color perception differences between the right and left sides, the polarizing plate according to the present invention has been designed to satisfy conditions (ii) and (iii) while stacking a retardation layer satisfying condition (i) on one surface of the polarizer.

For the polarizing plate including the retardation layer stacked on one surface of the polarizer and having an in-plane retardation of 0 nm to 10 nm and an out-of-plane retardation of -30 nm to -3 nm at a wavelength of 550 nm, conditions (ii) and (iii) are set to improve visibility or color perception at the right and left sides while improving color uniformity. Conditions (ii) and (iii) are values obtained by calculating the ratio of light transmittance of the polarizing plate at a wavelength of 390 nm to light transmittance of the polarizing plate at a wavelength of 550 nm and the ratio of light transmittance of the polarizing plate at a wavelength of 400 nm to light transmittance of the polarizing plate at a wavelength of 550 nm, respectively. Wavelengths of 390 nm and 400 nm relate to blue light among the entire light spectrum and higher light transmittance at wavelengths of 390 nm and 400 nm indicates a lower degree of absorption of blue light. However, the inventors of the present invention confirmed that high light transmittance at wavelengths of 390 nm and 400 nm allowed insignificant reduction in visibility and color perception differences between the right and left sides. Accordingly, the inventors of the present invention have derived conditions (ii) and (iii) in consideration of both light transmittance at wavelengths of 390 nm and 400 nm and light transmittance at a wavelength of 550 nm, and confirmed significant improvement in visibility and color perception at the right and left sides when conditions (ii) and (iii) are within certain ranges.

FIG. 1 is a graph depicting wavelength-dependent light transmittance of each polarizing plate according to an embodiment of the present invention (indicated by a solid line) and comparative embodiments (indicated by a dotted line or a dash-dotted line).

Referring to FIG. 1, a polarizing plate according to one embodiment of the invention has different ratios of light transmittance at particular wavelengths to light transmittance at a wavelength of 550 nm than polarizing plates of comparative examples. That is, the polarizing plate according to the embodiment of the invention has a much higher or slightly higher ratio of light transmittance at a particular wavelength to light transmittance at a wavelength of 550 nm than the polarizing plates of comparative examples. Nevertheless, the polarizing plate according to the embodiment of the

invention exhibited a significant effect on reduction in visibility and color perception differences between the right and left sides, as compared with the polarizing plates of the comparative examples. This will be described with reference to examples and comparative examples described below.

In one embodiment, the polarizing plate may have a light transmittance ratio of 0.450 to 0.460, as calculated according to Equation 1, and a light transmittance ratio of 0.711 to 0.729, as calculated according to Equation 2. Within this range, the polarizing plate according to the present invention can be easily manufactured while allowing easy regulation of the effects of the present invention.

In one embodiment, the polarizing plate may have a light transmittance of 42.5% to 43.5%, preferably 42.7% to 43.3%, at a wavelength of 550 nm. Within this range, the polarizing plate can easily realize the effects of the present invention.

In one embodiment, the polarizing plate may have a light transmittance of 10% to 20%, preferably 19% to 20%, at a wavelength of 390 nm. Within this range, the polarizing plate can easily realize the effects of the present invention.

In one embodiment, the polarizing plate may have a light transmittance of 25% to 35%, preferably 30% to 32%, more preferably 30.5% to 32% or 30.5% to 31%, at a wavelength of 400 nm. Within this range, the polarizing plate can easily realize the effects of the present invention.

The transmittance ratio of Equation 1 and the transmittance ratio of Equation 2 can be realized by adjusting the polarizer and/or the retardation layer in the polarizing plate. This will be described in detail below.

The polarizing plate may have a light transmittance ratio of greater than 0.795 and less than 0.805, as calculated according to Equation 3, and a light transmittance ratio of greater than 0.835 and less than 0.850, as calculated according to Equation 4. Within this range, the polarizing plate can further improve visibility and color perception at the right and left sides through further reduction in visibility and color perception differences between the right and left sides and can further improve color uniformity when applied to an optical display panel.

[Equation 3]

$$\text{Light transmittance ratio} = TS410/TS550$$

[Equation 4]

$$\text{Light transmittance ratio} = TS420/TS550$$

(in Equation 3 and Equation 4,

TS550 denotes a light transmittance (unit: %) of the polarizing plate at a wavelength of 550 nm,
TS410 denotes light transmittance (unit: %) of the polarizing plate at a wavelength of 410 nm, and
TS420 denotes light transmittance (unit: %) of the polarizing plate at a wavelength of 420 nm.)

For the polarizing plate including the retardation layer stacked on one surface of the polarizer and having an in-plane retardation of 0 nm to 10 nm and an out-of-plane retardation of -30 nm to -3 nm at a wavelength of 550 nm, the ratio of Equation 3 and the ratio of Equation 4 are set to improve visibility or color perception at the right and left sides while improving color uniformity. The ratio of Equation 3 and the ratio of Equation 4 are values obtained by calculating the ratio of light transmittance of the polarizing plate at a wavelength of 410 nm to light transmittance of the polarizing plate at a wavelength of 550 nm and the ratio of light transmittance of the polarizing plate at a wavelength of 420 nm to light transmittance of the polarizing plate at a wavelength of 550 nm, respectively. Wavelengths of 410 nm and 420 nm relate to blue light among the entire light spectrum and higher light transmittance at wavelengths of 410 nm and 420 nm indicate a lower degree of absorption of blue light. The inventors of the present invention have derived the ratio of Equation 3 and the ratio of Equation 4 in consideration of both light transmittance at wavelengths of 410 nm and 420 nm and light transmittance at a wavelength of 550 nm, and confirmed significant improvement in visibility and color perception at the right and left sides when the ratio of Equation 3 and the ratio of Equation 4 are within certain ranges.

In one embodiment, the polarizing plate may have a light transmittance ratio of 0.798 or more but less than 0.805, as calculated according to Equation 3, and a light transmittance ratio of 0.836 to 0.849, as calculated according to Equation 4. Within this range, the polarizing plate can be easily manufactured while allowing easy regulation of the effects of the present invention.

In one embodiment, the polarizing plate may have a light transmittance of 33% to 35%, preferably 34 to 35%, or 34.3% to 34.8%, at a wavelength of 410 nm. Within this range, the polarizing plate can easily realize the effects of the present invention.

In one embodiment, the polarizing plate may have a light transmittance of 36% to 38%, preferably 36% to 37%, or

36.3% to 37.2% at a wavelength of 420 nm. Within this range, the polarizing plate can easily realize the effects of the present invention.

The transmittance ratio of Equation 3 and the transmittance ratio of Equation 4 can be realized by adjusting the polarizer and/or the retardation layer in the polarizing plate. This will be described in detail below.

Next, components of the polarizing plate according to the present invention will be described in detail.

## Retardation layer

The retardation layer is stacked on one surface of the polarizer and can assist in reducing the difference in visibility or color perception between the right and left sides. In one embodiment, the retardation layer is stacked on a light incidence surface of the polarizer on which internal light is incident, thereby facilitating realization of the effects of the present invention. Herein, the "internal light" means light incident on the polarizer after being emitted from a backlight unit and passing through a liquid crystal panel.

The retardation layer has an in-plane retardation of 0 nm to 10 nm and an out-of-plane retardation of -30 nm to -3 nm at a wavelength of 550 nm. Within these ranges of in-plane retardation and out-of-plane retardation, the retardation layer can assist in reducing the difference in visibility or color perception between the right and left sides. For example, the retardation layer may have an in-plane retardation of 0 nm, 1 nm, 2 nm, 3 nm, 4 nm, 5 nm, 6 nm, 7 nm, 8 nm, 9 nm, or 10 nm at a wavelength of 550 nm, and an out-of-plane retardation of -30 nm, -29 nm, -28 nm, -27 nm, -26 nm, -25 nm, -24 nm, -23 nm, -22 nm, -21 nm, -20 nm, -19 nm, -18 nm, -17 nm, -16 nm, - 15 nm, -14 nm, -13 nm, -12 nm, -11 nm, -10 nm, -9 nm, -8 nm, -7 nm, -6 nm, -5 nm, -4 nm, or -3 nm at a wavelength of 550 nm.

In one embodiment, the retardation layer may have an in-plane retardation of 0 nm to 5 nm and an out-of-plane retardation of -20 nm to -3 nm.

The retardation layer may have a degree of biaxiality of 1.40 to 1.60, for example, 1.45 to 1.50, at a wavelength of 550 nm. Within this range, the retardation layer can be easily manufactured and can assist in reducing the difference in visibility or color perception between the right and left sides.

In one embodiment, the retardation layer may be a negative C layer satisfying a relationship of the indexes of refraction according to Equation 5:

[Equation 5]

$$nx \fallingdotseq ny > nz$$

where nx, ny, and nz indicate the indexes of refraction of the retardation layer at a wavelength of 550 nm in the slow axis direction, the fast axis direction, and the thickness direction, respectively.

In one embodiment, the retardation layer may have a higher light transmittance at a wavelength of 390 nm, 400 nm, 410 nm, 420 nm, or 550 nm than the polarizer. With this structure, the retardation layer can reduce color deviation of the polarizing plate between the right and left sides.

For example, the retardation layer may have a light transmittance of 45% to 62%, preferably 48% to 60%, at a wavelength of 390 nm. For example, the retardation layer may have a light transmittance of 70% to 90%, preferably 72% to 85%, at a wavelength of 400 nm. For example, the retardation layer may have a light transmittance of 75% to 95%, preferably 80% to 90%, at a wavelength of 410 nm. For example, the retardation layer may have a light transmittance of 75% to 95%, preferably 80% to 92%, at a wavelength of 420 nm. For example, the retardation layer may have a light transmittance of 80% to 95%, preferably 83% to 92%, at a wavelength of 550 nm.

In another embodiment, the retardation layer may be a positive C layer.

The retardation layer may have a slow axis and a fast axis in the in-plane direction, in which the slow axis corresponds to an axis having a high index of refraction and the fast axis corresponds to an axis having a low index of refraction. When a light absorption axis of the polarizer is 0°, the slow axis of the retardation layer is tilted at an angle of -5° to 5°, preferably -3° to 3°, with respect to the light absorption axis of the polarizer. Within this range, the polarizing plate can easily realize the effects of the present invention.

The retardation layer may be formed of any material so long as the retardation layer can realize the aforementioned in-plane retardation and out-of-plane retardation through stretching or coating and/or drying. For example, the retardation layer may be a liquid crystal layer or a non-liquid crystal layer. For example, the retardation layer may be a stretched film or cured coating layer. The liquid crystal layer requires formation of an alignment film for alignment of liquid crystals and can suffer from generation of foreign substances during the formation of the liquid crystal layer.

In one embodiment, the retardation layer may be a film or coating layer containing a polymer with a positive inherent birefringence. The positive inherent birefringence means that the index of refraction increases in a stretching direction (MD).

In one embodiment, the retardation layer may be formed of a cellulose resin including triacetylcellulose (TAC) and

the like, a norbornene resin, such as a cyclic olefin polymer (COP) or a cyclic olefin copolymer (COC), and the like. In one embodiment, the retardation layer may be a film formed of at least one selected from among polyester resins including polyethylene terephthalate, polybutylene terephthalate, polyethylene naphthalate (PEN), polybutylene naphthalate, and the like, polycarbonate resins, polyether sulfone resins, polysulfone resins, polyamide resins, polyimide resins, polyolefin resins, polyarylate resins, polyvinyl alcohol resins, polyvinyl chloride resins, and polyvinylidene chloride resins.

In another embodiment, the retardation layer may include at least one of a polystyrene polymer or a cellulose polymer. In one embodiment, the retardation layer may be formed of a composition including at least one of a halogen-containing polystyrene polymer or a halogen-containing cellulose polymer. The halogen may be fluorine.

The halogen-containing polystyrene polymer may include a repeat unit of Formula 1:

[Formula 1]

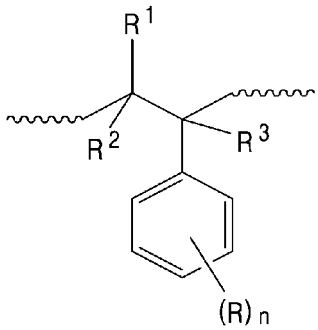

(In Formula 1,

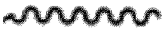 is a linking site of an element; $R^1$, $R^2$ and $R^3$ are each independently a hydrogen atom, an alkyl group, a substituted alkyl group, or a halogen; Rs are each independently an alkyl group, a substituted alkyl group, a halogen, a hydroxyl group, a carboxyl group, a nitro group, an alkoxy group, an amino group, a sulfonate group, a phosphate group, an acyl group, an acyloxy group, a phenyl group, an alkoxy carbonyl group, or a cyano group, provided that at least one of $R^1$, $R^2$ and $R^3$ is a halogen and/or at least one R is a halogen; and n is an integer of 0 to 5).

In one embodiment, the halogen means fluorine (F), Cl, Br, or I, preferably F.

The halogen-containing polystyrene polymer may be prepared by, for example, polymerizing a mixture including at least one of 1-(2,2-difluoroethenyl)-2-fluorobenzene or 1',2',2'-trifluorostyrene. The mixture may further include styrene.

The cellulose polymer may include at least a unit, in which at least some hydrogen atoms of hydroxyl groups [a $C_2$ hydroxyl group, a $C_3$ hydroxyl group or a $C_6$ hydroxyl group] of a sugar monomer constituting cellulose are substituted with an acyl group or an ether group. That is, the cellulose polymer may include at least one of a cellulose ester polymer or a cellulose ether polymer.

For example, the cellulose polymer may include a cellulose ester polymer including at least a unit in which at least some hydrogen atoms (H) of hydroxyl (OH) groups [a $C_2$ hydroxyl group, a $C_3$ hydroxyl group or a $C_6$ hydroxyl group] of a sugar monomer constituting cellulose are substituted with an acyl group, as represented by Formula 2. Here, the acyl group may be substituted or unsubstituted.

[Formula 2]

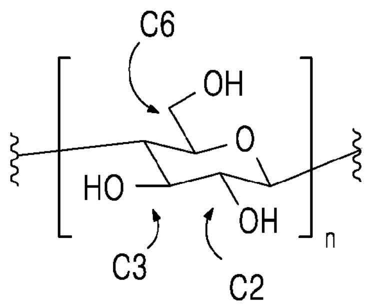

where n is an integer of 1 or more.

Substituent groups for the cellulose ester polymer or the acyl group may include at least one selected from among a halogen, a nitro group, an alkyl group (for example, a $C_1$ to $C_{20}$ alkyl group), an alkenyl group (for example, a $C_2$ to $C_{20}$

alkenyl group), a cycloalkyl group (for example, a $C_3$ to $C_{10}$ cycloalkyl group), an aryl group (for example, a $C_6$ to $C_{20}$ aryl group), a heteroaryl group (for example, a $C_3$ to $C_{10}$ aryl group), an alkoxy group (for example, a $C_1$ to $C_{20}$ alkoxy group), an acyl group, and a halogen-containing functional group. The substituent groups may be the same as or different from each other.

Herein, "acyl" may mean R-C(=O)-* (* being a linking site, R being a $C_1$ to $C_{20}$ alkyl group, a $C_3$ to $C_{20}$ cycloalkyl group, a $C_6$ to $C_{20}$ aryl group, or a $C_7$ to $C_{20}$ arylalkyl group), as well known to those skilled in the art. The "acyl" is coupled to a ring of the cellulose through ester bonding (through an oxygen atom) in the cellulose.

Here, "alkyl", "alkenyl", "cycloalkyl", "aryl", "heteroaryl", "alkoxy", and "acyl" refer to non-halogen compounds free from a halogen for convenience. The composition for the first retardation layer may include the cellulose ester polymer alone or a mixture including the cellulose ester polymer.

Here, "halogen" means fluorine (F), Cl, Br, or I, preferably F.

The "halogen-containing functional group" is an organic functional group containing at least one halogen and may include an aromatic, aliphatic or alicyclic functional group. For example, the halogen-containing functional group may mean a halogen-substituted $C_1$ to $C_{20}$ alkyl group, a halogen-substituted $C_2$ to $C_{20}$ alkenyl group, a halogen-substituted $C_2$ to $C_{20}$ alkynyl group, a halogen-substituted $C_3$ to $C_{10}$ cycloalkyl group, a halogen-substituted $C_1$ to $C_{20}$ alkoxy group, a halogen-substituted acyl group, a halogen-substituted $C_6$ to $C_{20}$ aryl group, or a halogen-substituted $C_7$ to $C_{20}$ arylalkyl group, without being limited thereto.

The "halogen-substituted acyl group" may be R'-C(=O)-* (* being a linking site, R' being a halogen-substituted $C_1$ to $C_{20}$ alkyl group, a halogen-substituted $C_3$ to $C_{20}$ cycloalkyl group, a halogen-substituted $C_6$ to $C_{20}$ aryl group, or a halogen-substituted $C_7$ to $C_{20}$ arylalkyl group). The "halogen-substituted acyl group" may be coupled to a ring of the cellulose through ester bonding (through an oxygen atom) in the cellulose.

The cellulose ester polymer may be prepared by a typical method known to those skilled in the art or may be obtained from commercially available products. For example, the cellulose ester polymer having an acyl group as a substituent group may be prepared by reacting trifluoroacetic acid or trifluoroacetic anhydride with the sugar monomer constituting the cellulose represented by Formula 2 or a polymer of the sugar monomer, by reacting trifluoroacetic acid or trifluoroacetic anhydride therewith, followed by additionally reacting an acylation agent (for example, anhydride of carboxylic acid, or carboxylic acid) therewith, or by reacting both trifluoroacetic acid or trifluoroacetic anhydride and the acylation agent therewith.

The retardation layer may have a thickness of 20 μm to 80 μm, preferably 30 μm to 50 μm. Within this range, the retardation layer can be used in the polarizing plate.

The retardation layer may have a thickness ratio of 90% or more, for example, 99% to 100%, with respect to a thickness of total retardation layers stacked on the lower surface of the polarizer. Within this range, the retardation layer can realize the effects of the present invention while enabling reduction in thickness of the polarizing plate.

The polarizing plate may further include at least one first protective layer stacked on one or the other surface of the retardation layer.

The first protective layer serves to improve mechanical strength of the polarizing plate or to provide an additional function to the retardation layer.

In one embodiment, the first protective layer may be a positive A layer satisfying a relationship: $nx > ny \fallingdotseq nz$ or a negative A layer satisfying a relationship: $nx \fallingdotseq nz > ny$. The first protective layer may be a liquid crystal layer or a non-liquid crystal layer. Herein, nx, ny, and nz indicate the indexes of refraction of the first protective layer at a wavelength of 550 nm in the slow direction, the fast direction, and the thickness direction, respectively.

In one embodiment, the retardation layer may be disposed closer to the polarizer than the first protective layer. With this structure, the polarizing plate can easily secure the effects of the present invention.

The retardation layer may be bonded to the polarizer or the first protective layer via a bonding layer or an adhesive layer. The bonding layer or the adhesive layer may be formed of a photocurable or a heat curable bonding agent or adhesive layer. The bonding layer or the adhesive layer may have a thickness of 1 μm to 30 μm, for example, 2 μm to 10 μm, or 2 μm to 3 μm. Within this range, the bonding layer or the adhesive layer can be used in the polarizing plate.

## Polarizer

The polarizer includes a light absorption type polarizer that divides incident light into two orthogonal polarization components and transmits one polarization component while absorbing the other polarization component.

In one embodiment, an axis of the polarizer having a high index of refraction in the in-plane direction of the polarizer may be a light absorption axis of the polarizer and an axis of the polarizer having a low index of refraction may be a light transmission axis of the polarizer. In one embodiment, the light absorption axis of the polarizer may correspond to the machine direction (MD) of the polarizer and the light transmission axis of the polarizer may correspond to the transverse direction (TD) thereof.

The polarizer may have a degree of polarization of 95% or more, specifically 95% to 100%, more specifically 98%

to 100%. Within this range, the polarizing plate can easily secure the effects of the present invention.

The polarizer may include a polarizer that contains a dichroic dye and is uniaxially stretched. Specifically, the polarizer containing a dichroic dye may include a polarizer prepared by uniaxially stretching a base film for polarizers and dyeing the base film with a dichroic dye (for example, iodine or an iodine-containing substance including potassium iodide). The base film for polarizers may include a polyvinyl alcohol film or a derivative thereof, without being limited thereto. The polarizer may be prepared by any typical method known to those skilled in the art.

The polarizer may have a thickness of 1 μm to 40 μm, specifically 15 μm to 30 μm, more specifically 17 μm to 20 μm. Within this range, the polarizer can be used in the polarizing plate.

The polarizing plate according to the present invention includes a polyvinyl alcohol film described below and a polarizer produced by a method described below. With this structure, the polarizing plate can easily satisfy Equation 1 and Equation 2, preferably Equation 3 and Equation 4 in addition to Equation 1 and Equation 2.

The polyvinyl alcohol film may be a typical polyvinyl alcohol film known to those skilled in the art.

In one embodiment, the polyvinyl alcohol film contains hydrophilic functional groups and hydrophobic functional groups. The hydrophobic functional groups are present together with the hydrophilic functional groups in the polyvinyl alcohol film, which are hydroxyl groups (OH groups).

The hydrophobic functional groups may be present in at least one of a main chain or a side chain of a polyvinyl alcohol resin constituting the polyvinyl alcohol film. Here, the main chain means a part constituting a main backbone of the polyvinyl alcohol resin and the side chain means a backbone connected to the main chain. Preferably, the hydrophobic functional groups are present in the main chain of the polyvinyl alcohol resin.

The polyvinyl alcohol resin containing the hydrophilic and hydrophobic functional groups may be prepared by polymerizing one or more vinyl ester monomers, such as vinyl acetate, vinyl formate, vinyl propionate, vinyl butyrate, vinyl pivalate, vinyl isopropenyl acetate, and the like, with a monomer providing a hydrophobic functional group. Preferably, the vinyl ester monomer includes vinyl acetate. The monomer providing the hydrophobic functional group may include a monomer providing hydrocarbon repeat units including ethylene, propylene, and the like.

The polyvinyl alcohol film may have a thickness of 50 μm or less, for example, 10 μm to 50 μm. Within this range, the polyvinyl alcohol film does not suffer from melting and fracture in the stretching process.

The polarizer may be manufactured by dyeing, stretching, crosslinking, color correction and drying of the polyvinyl alcohol film. The sequence of the dyeing, stretching, crosslinking, color correction and drying processes may be changed depending upon the kind of polyvinyl alcohol film and the process of manufacturing the polarizer.

The dyeing process includes treatment of a polyvinyl alcohol film in a dyeing bath containing a dichroic material. In the dyeing process, the polyvinyl alcohol film is dipped in the dyeing bath containing the dichroic material. The dyeing bath containing the dichroic material includes an aqueous solution containing the dichroic material and boric acid. As the dyeing bath includes both the dichroic material and a boron compound, the dyed polyvinyl alcohol film can be prevented from fracture when stretched under stretching conditions described below.

The dichroic material may include, as iodine, at least one selected from among potassium iodide, hydrogen iodide, lithium iodide, sodium iodide, zinc iodide, aluminum iodide, lithium iodide, lead iodide, and copper iodide. The dichroic material may be present in an amount of 0.5 mol/ml to 10 mol/ml, preferably 0.5 mol/ml to 5 mol/ml, in the dyeing bath, preferably in the dyeing solution. Within this range, uniform dyeing can be achieved.

The boron compound can assist in prevention of melting and fracture of the polyvinyl alcohol film upon stretching of the polyvinyl alcohol film. The boron compound can assist in prevention of melting and fracture of the polyvinyl alcohol film in the subsequent stretching process even when the polyvinyl alcohol film is stretched at high temperature and high stretching ratio.

The boron compound may include at least one of boric acid or borax. The boron compound may be present in an amount of 0.1 wt% to 5 wt%, preferably 0.3 wt% to 3 wt%, in the dyeing bath, preferably in the dyeing solution. Within this range, the polyvinyl alcohol film does not suffer from melting and fracture in the stretching process and can achieve high reliability.

The dyeing solution may have a temperature of 20°C to 50°C, specifically 25°C to 40°C. The dyeing process may be performed by dipping the polyvinyl alcohol film in the dyeing bath for 30 sec to 120 sec, specifically 40 sec to 80 sec.

The stretching process includes uniaxially stretching the dyed polyvinyl alcohol film at a stretching ratio of 5.7 times or more, for example, 5.7 times to 7 times, at 57°C or more, for example, at 57°C to 65°C.

The stretching process is performed by either wet stretching or dry stretching. Preferably, the stretching process includes wet stretching in order to apply the boron compound in the stretching process. Wet stretching includes uniaxial stretching of the polyvinyl alcohol film in an aqueous solution containing a boron compound in the machine direction.

The boron compound may include at least one of boric acid or borax, preferably boric acid. The boron compound may be present in an amount of 0.5 wt% to 10 wt%, preferably 1 wt% to 5 wt%, in a stretching bath, preferably in a stretching solution. Within this range, the polyvinyl alcohol film does not suffer from melting and fracture in the stretching process and can achieve high reliability.

The crosslinking process is performed to enhance adsorption of the dichroic materials to the stretched polyvinyl

alcohol film. A crosslinking solution used in the crosslinking process includes a boron compound. The boron compound can assist in enhanced adsorption of the dichroic material described above while improving reliability of the polarizer even when the polarizer is left under thermal shock conditions.

The boron compound may include at least one of boric acid or borax. The boron compound may be present in an amount of 0.5 wt% to 10 wt%, preferably 1 wt% to 5 wt%, in a crosslinking bath, preferably in a crosslinking solution. Within this range, the polyvinyl alcohol film does not suffer from melting and fracture in the stretching process and can achieve high reliability. The crosslinking solution may have a temperature of 20°C to 50°C, specifically 25°C to 40°C. The crosslinking process may be performed by dipping the polyvinyl alcohol film in the crosslinking bath for 30 sec to 120 sec, specifically for 40 sec to 80 sec.

The color correction process improves durability of the polarizer. A color correction bath may optionally contain 10 wt% or less, preferably 1 wt% to 4.5 wt%, of potassium iodide. A color correction solution may have a temperature of 20°C and 50°C, specifically 25°C and 40°C. The color correction process may be performed by dipping the polyvinyl alcohol film in the color correction bath for 5 sec to 50 sec, specifically for 5 sec to 20 sec.

The drying process may be performed by treating the polyvinyl alcohol film at a temperature of 30°C to 80°C, preferably 40°C to 80°C, for 2 min or less, preferably 1 minute to 2 minutes, after the coloring process. The drying process may be performed by hot air drying, without being limited thereto.

The ratios of Equation 1 and Equation 2 may be achieved by adjusting the conditions in the color correction process and the drying process in manufacture of the polarizer. The ratios of Equation 3 and Equation 4 may be achieved by adjusting the conditions in the color correction process and the drying process in manufacture of the polarizer.

The polyvinyl alcohol film may be further subjected to at least one of a washing process or a swelling process before the dyeing process.

In the washing process, the polyvinyl alcohol film is washed with water to remove foreign matter therefrom.

In the swelling process, the polyvinyl alcohol film is dipped in a swelling bath in a predetermined temperature range to facilitate dyeing with the dichroic material and stretching. The swelling process may be performed at 15°C to 35°C, preferably at 20°C to 30°C, for 30 sec to 50 sec.

The polarizer may have a degree of polarization of 99.996% or more.

The polarizing plate may include at least one second protective layer stacked on the other surface of the polarizer.

## Second protective layer

The second protective layer is stacked on a light exit surface of the polarizer, through which internal light exits, to affect light emitted from the polarizer, thereby further improving image quality or protecting the polarizer.

The second protective layer may include a protective film or a protective coating layer.

The protective film may be an optically clear film and may be formed of at least one selected from among, for example, cellulose resins including triacetylcellulose (TAC) and the like, polyester resins including polyethylene terephthalate, polybutylene terephthalate, polyethylene naphthalate (PEN), polybutylene naphthalate, and the like, cyclic polyolefin resins, polycarbonate resins, polyether sulfone resins, polysulfone resins, polyamide resins, polyimide resins, polyolefin resins, polyarylate resins, polyvinyl alcohol resins, polyvinyl chloride resins, and polyvinylidene chloride resins. Specifically, the protective film may be a TAC or PET film. The protective coating layer may be formed of at least one of a thermosetting composition or a photocurable composition.

In one embodiment, the second protective layer may be a retardation film.

In one embodiment, the second protective layer may have an in-plane retardation (Re) of 3,000 nm or more, specifically 5,000 nm to 15,000 nm, more specifically 5,000 nm to 12,000 nm, at a wavelength of 550 nm. Within this range, the second protective layer can achieve improvement in front contrast ratio, suppression of rainbow mura, and the like.

In one embodiment, the second protective layer may have an out-of-plane retardation (Rth) of 6,000 nm or more, specifically 6,000 nm to 15,000 nm, more specifically 6,000 nm to 12,000 nm, at a wavelength of 550 nm. Within this range, the second protective layer can achieve suppression of mura due to uneven birefringence, improvement in viewing angle characteristics of a liquid crystal display, and the like.

In one embodiment, the second protective layer may have a degree of biaxiality (NZ) of 2.5 or less, specifically 1.0 to 2.2, more specifically 1.2 to 2.0, still more specifically 1.4 to 1.8, at a wavelength of 550 nm. Within this range, the second protective layer can achieve suppression of mura due to uneven birefringence, maintenance of mechanical strength of the film, and the like.

In one embodiment, the second protective layer may be a film formed of the aforementioned material and stretched at a predetermined stretching ratio. As a result, the second protective layer may have a slow axis and a fast axis in an in-plane direction thereof.

In one embodiment, an axis of the second protective layer having a low index of refraction in the in-plane direction thereof corresponds to the machine direction (MD) of the second protective layer and an axis of the second protective layer having a high index of refraction in the in-plane direction thereof corresponds to the transverse direction (TD) of the second

protective layer. In this embodiment, the second protective layer may be a TD uniaxially stretched protective film.

In another embodiment, the axis of the second protective layer having a low index of refraction in the in-plane direction thereof corresponds to the transverse direction (TD) of the second protective layer and an axis of the second protective layer having a high index of refraction in the in-plane direction thereof corresponds to the machine direction (MD) of the second protective layer. In this embodiment, the second protective layer may be an MD uniaxially stretched protective film.

In another embodiment, the axis of the second protective layer having a low index of refraction in the in-plane direction thereof corresponds to an oblique direction relative to the transverse direction of the second protective layer and an axis of the second protective layer having a high index of refraction in the in-plane direction thereof corresponds to an oblique direction relative to the machine direction of the second protective layer. In this embodiment, the second protective layer may be an MD/TD biaxially stretched film or an MD/TD biaxially stretched coating layer.

In one embodiment, the second protective layer may include a TD uniaxially or biaxially stretched protective film in order to have the axis having a low index of refraction and the axis having a high index of refraction in the in-plane direction.

The second protective layer may be formed by a stretched film manufacturing method including stretching a melt-extruded non-stretched film to a stretching ratio of 100% to 200%, preferably 120% to 140%, of a TD width of the initial resin only in the TD upon TD uniaxial stretching. Stretching may be performed by at least one of dry stretching or wet stretching at a temperature of (Tg - 20)°C to (Tg + 50)°C, specifically at 70°C to 250°C, more specifically at 80°C to 200°C, more specifically at 100°C to 200°C, with reference to the glass transition temperature Tg of the resin for the protective film. Within this range, uniform stretching can be achieved.

The second protective layer may have a thickness of 100 μm or less, specifically greater than 0 μm and 100 μm or less, more specifically 10 μm to 90 μm. Within this range, the second protective layer can be used in the polarizing plate.

The polarizing plate may further include a functional coating layer formed on at least one surface of the second protective layer. The functional coating layer may include at least one selected from among a hard coating layer, an anti-fingerprint layer, an antireflection layer, a low reflectivity layer, an antiglare layer, and a primer layer, without being limited thereto.

In one embodiment, the second protective layer may have a higher light transmittance at a wavelength of 390 nm, 400 nm, 410 nm, 420 nm, or 550 nm than the polarizer.

For example, the retardation layer may have a light transmittance of 45% to 62%, preferably 48% to 60%, at a wavelength of 390 nm. For example, the retardation layer may have a light transmittance of 70% to 90%, preferably 72% to 85%, at a wavelength of 400 nm. For example, the retardation layer may have a light transmittance of 75% to 95%, preferably 80% to 90%, at a wavelength of 410 nm. For example, the retardation layer may have a light transmittance of 75% to 95%, preferably 80% to 92%, at a wavelength of 420 nm. For example, the retardation layer may have a light transmittance of 80% to 95%, preferably 83% to 92%, at a wavelength of 550 nm.

The second protective layer may be bonded to the polarizer via a bonding layer or an adhesive layer. The bonding layer or the adhesive layer may be formed of a photocurable or heat curable bonding agent or adhesive. The bonding layer or the adhesive layer may have a thickness of 1 μm to 30 μm, for example, 2 μm to 10 μm, or 2 μm to 3 μm.

FIG. 2 is a sectional view of a polarizing plate according to one embodiment of the invention. Referring to FIG. 2, the polarizing plate may include a polarizer 10, a retardation layer 20 stacked on a lower surface of the polarizer 10, and a second protective layer 30 stacked on an upper surface of the polarizer 10.

An optical display device according to the present invention includes the polarizing plate according to the present invention. In one embodiment, the optical display device may include a vertical alignment liquid crystal display, for example, an IPS or FFS-mode liquid crystal display.

The liquid crystal display includes a liquid crystal panel, the polarizing plate according to the present invention stacked on a light exit surface of the liquid crystal panel, and a polarizing plate (light source-side polarizing plate) disposed on a light incidence surface of the liquid crystal panel. The polarizing plate disposed on the light incidence surface may include a polarizing plate typically known to those skilled in the art. The polarizing plate according to the present invention may be used as a viewer-side polarizing plate. However, it should be understood that the present invention is not limited thereto and the polarizing plate according to the present invention may be used as a viewer-side polarizing plate or a light source-side polarizing plate.

In the liquid crystal panel, alignment of liquid crystals is changed depending on application and non-application of voltage to allow light emitted from a light source to be emitted therethrough.

The liquid crystal panel may include a pair of substrates and a liquid crystal layer as a display medium interposed between the substrates. The substrate at one side (color filter substrate) may be provided with a color filter and a black matrix, and the substrate at the other side (active matrix substrate) may be provided with a switching device (for example, TFT) configured to control electrical and optical properties of the liquid crystals, and with pixel lines and signal lines that provide gate signals to the switching element, without being limited thereto.

In one embodiment, the liquid crystal panel may employ IPS or FFS-mode liquid crystals. With this structure, the

liquid crystal display can achieve improvement in viewing angle.

The liquid crystal display includes a light source on a lower surface of the light-source side polarizing plate. The light source may include a light source having a continuous light emission spectrum. For example, the light source may include a white LED light source, a quantum dot (QD) light source, a metal fluoride red phosphor light source, specifically a light source containing KSF ($K_2SiF_6:Mn^{4+}$) phosphors, KTF ($K_2TiF_6:Mn^{4+}$) phosphors, and the like.

[Mode for Invention]

Next, the present invention will be described in more detail with reference to some examples. However, it should be noted that these examples are provided for illustration only and are not to be construed in any way as limiting the invention.

**Example 1**

**(1) Preparation of polarizer**

A polyvinyl alcohol film (VF-TS #4500, thickness: 45 μm, Kuraray Co., Ltd.) washed with water at 25°C was subjected to swelling treatment with water at 30°C in a swelling bath.

After passing through the swelling bath, the film was dyed at 30°C in a dyeing bath of an aqueous solution containing 1 mol/ml of potassium iodide and 1 wt% of boric acid for 65 seconds. After passing through the dyeing bath, the film was stretched to 5.7 times an initial length thereof through MD uniaxial stretching in a wet stretching bath of an aqueous solution containing 3 wt% of boric acid at 60°C. After passing through the wet stretching bath, the film was left at 25°C in a crosslinking bath of an aqueous solution containing 3 wt% of boric acid for 65 seconds.

After passing through the crosslinking bath, the film was left at 30°C for 10 seconds in a color correction bath of an aqueous solution containing 4.5 wt% of potassium iodide as a color correction solution. The film having passed through the color correction bath was washed with water and dried with hot air at 80°C for 1 min, thereby preparing a polarizer (thickness: 17 μm).

**(2) Preparation of retardation layer**

A retardation layer (ZRD40SL, thickness: 40 μm, Re at 550 nm: 0 nm, Rth at 550 nm: -5 nm, triacetylcellulose resin, negative C layer, Fuji Film Co., Ltd.) was prepared. The retardation layer was a single layer.

**(3) Preparation of polarizing plate**

A photocurable bonding agent (epoxy resin bonding agent) was deposited on both surfaces of the prepared polarizer. A PET film (thickness: 85 μm, a polyethylene terephthalate film having an antiglare layer formed on an upper surface thereof, ASGR12D-PET, DNP) was stacked as a second protective layer on an upper surface of the polarizer. The prepared retardation layer was stacked on a lower surface of the polarizer, thereby preparing a polarizing plate in which the second protective layer, the bonding layer, the polarizer, the bonding layer, and the retardation layer were sequentially stacked. Assuming that the light absorption axis of the polarizer was 0°, the slow axis of the retardation layer was tilted at an angle of 0° with respect to the light absorption axis of the polarizer.

**Example 2**

A polarizing plate was prepared in the same manner as in Example 1 except that a polarizer was prepared by dipping the film in a color correction bath of an aqueous solution containing 4.0 wt% of potassium iodide at 30°C for 10 sec, followed by washing the film with water and drying the film with hot air at 65°C for 1 min.

**Example 3**

A polarizing plate was prepared in the same manner as in Example 1 except that a polarizer was prepared by dipping the film in a color correction bath of an aqueous solution containing 3.5 wt% of potassium iodide at 30°C for 10 sec, followed by washing the film with water and drying the film with hot air at 45°C for 1 min.

**Comparative Example 1**

A polarizing plate was prepared in the same manner as in Example 1 except that a polarizer was prepared by

dipping the film in a color correction bath of an aqueous solution containing 4.5 wt% of potassium iodide at 30°C for 10 sec, followed by washing the film with water and drying the film with hot air at 85°C for 1 min.

**Comparative Example 2**

A polarizing plate was prepared in the same manner as in Example 1 except that a polarizer was prepared by dipping the film in a color correction bath of an aqueous solution containing 6.0 wt% of potassium iodide at 30°C for 10 sec, followed by washing the film with water and drying the film with hot air at 85°C for 1 min.

**Comparative Example 3**

A polarizing plate was prepared in the same manner as in Example 1 except that a polarizer was prepared by dipping the film in a color correction bath of an aqueous solution containing 5.0 wt% of potassium iodide at 30°C for 10 sec, followed by washing the film with water and drying the film with hot air at 95°C for 1 min.

Preparation of light source-side polarizing plate

A polarizer was prepared by the same method as above. A triacetylcellulose (TAC) film (KC4CT1SW, thickness: 40 μm, Konica Minolta Opto Inc.) was bonded to an upper surface of the polarizer and a polyethylene terephthalate (PET) film (thickness: 80 μm, Re at 550 nm: 8,400 nm, Rth at 550 nm: 9,800 nm, Toyobo Co., Ltd.) was bonded to a lower surface of the polarizer, thereby preparing a light source-side polarizing plate.

Preparation of liquid crystal module

Each of the polarizing plates prepared in Examples and Comparative Examples was adhesively attached to a light exit surface of an IPS liquid crystal-containing liquid crystal panel via an adhesive layer. Here, the negative C layer of the polarizing plate was attached to the liquid crystal panel. A liquid crystal module was manufactured by adhesively attaching the prepared light source-side polarizing plate to a light incidence surface of the IPS liquid crystal-containing liquid crystal panel via an adhesive layer. Here, a TAC film of the light source-side polarizing plate was adhesively attached to the liquid crystal panel.
The polarizing plates of Examples and Comparative Examples were evaluated as to the following properties listed in Table 1.

(1) Transmittance of polarizing plate (unit: %): With the polarizing plate of each of Examples and Comparative Examples placed in a transmittance meter V-7100, single light transmittance values at wavelengths of 390 nm, 400 nm, 410 nm, 420 nm, and 550 nm were obtained by transmitting light from the retardation layer side toward the polarizer in the normal direction relative to the in-plane direction of the polarizing plate. The ratios according to Equations 1 to 4 were calculated based on the measured single light transmittance values.
(2) Visibility at left and right sides at an azimuth angle of 60°: A liquid crystal module was manufactured using the polarizing plates prepared in Examples and Comparative Examples by the method described above. Using an EZ-Contrast XL-88, color coordinates (x, y) at each of (45°, 60°) and (135°, 60°) were obtained by specifying a left viewing angle to 135° and a right viewing angle to 45°, with a black color azimuth angle set to 60°. A distance from (45°, 60°) to (135°, 60°) was calculated as △(x, y).
(3) Visibility at left and right sides at an azimuth angle of 45°: A liquid crystal module was manufactured using the polarizing plates prepared in Examples and Comparative Examples by the method described above. Using an EZ-Contrast XL-88, color coordinates (x, y) at each of (45°, 45°) and (135°, 45°) were obtained by specifying a left viewing angle to 135° and a right viewing angle to 45°, with a black color azimuth angle set to 45°. A distance from (45°, 45°) to (135°, 45°) was calculated as △(x, y).

Table 1

| | | Example | | | Comparative Example | | |
|---|---|---|---|---|---|---|---|
| | | 1 | 2 | 3 | 1 | 2 | 3 |
| Light transmittance of polarizing plate | @390 nm | 19.556 | 19.746 | 19.620 | 19.000 | 12.440 | 18.661 |
| Light transmittance of polarizing plate | @400 nm | 30.641 | 30.947 | 30.946 | 29.609 | 28.387 | 30.038 |

(continued)

| | | Example | | | Comparative Example | | |
|---|---|---|---|---|---|---|---|
| | | 1 | 2 | 3 | 1 | 2 | 3 |
| Light transmittance of polarizing plate | @410 nm | 34.317 | 34.554 | 34.572 | 34.255 | 34.585 | 33.925 |
| Light transmittance of polarizing plate | @420 nm | 36.082 | 36.460 | 36.488 | 36.699 | 36.789 | 36.038 |
| Light transmittance of polarizing plate | @550 nm | 42.988 | 42.933 | 43.068 | 42.657 | 43.057 | 43.091 |
| Light transmittance ratio of polarizing plate | Equation 1 | 0.455 | 0.460 | 0.456 | 0.445 | 0.289 | 0.433 |
| Light transmittance ratio of polarizing plate | Equation 2 | 0.713 | 0.721 | 0.719 | 0.694 | 0.659 | 0.697 |
| Light transmittance ratio of polarizing plate | Equation 3 | 0.798 | 0.8048 | 0.803 | 0.803 | 0.803 | 0.787 |
| Light transmittance ratio of polarizing plate | Equation 4 | 0.839 | 0.849 | 0.847 | 0.860 | 0.854 | 0.836 |
| Color coordinates at (45°, 60°) | x | 0.310 | 0.314 | 0.311 | 0.327 | 0.340 | 0.323 |
| | y | 0.338 | 0.342 | 0.339 | 0.352 | 0.358 | 0.350 |
| Color coordinates at (135°, 60°) | x | 0.246 | 0.246 | 0.246 | 0.246 | 0.247 | 0.248 |
| | y | 0.256 | 0.255 | 0.261 | 0.250 | 0.252 | 0.258 |
| △(x,y) | | 0.10 | 0.11 | 0.10 | 0.13 | 0.14 | 0.14 |
| Color coordinates at (45°, 45°) | x | 0.313 | 0.317 | 0.315 | 0.331 | 0.338 | 0.328 |
| | y | 0.341 | 0.345 | 0.343 | 0.357 | 0.360 | 0.355 |
| Color coordinates at (135°, 45°) | x | 0.242 | 0.241 | 0.244 | 0.244 | 0.243 | 0.243 |
| | y | 0.248 | 0.245 | 0.255 | 0.243 | 0.246 | 0.249 |
| △(x,y) | | 0.12 | 0.13 | 0.11 | 0.14 | 0.16 | 0.14 |

$$*\text{Equation 1: } TS390/TS550$$

$$*\text{Equation 2: } TS400/TS550$$

$$*\text{Equation 3: } TS410/TS550$$

$$*\text{Equation 4: } TS420/TS550$$

As shown in Table 1, the polarizing plates according to the present invention had a good effect on reduction in visibility and color perception differences between the right and left sides.

This can be confirmed from FIG. 3, FIG. 5 and FIG. 6. As shown in FIG. 3, a difference in color perception between right-side and left-side images was low. In addition, as shown in FIG. 5 and FIG. 6, it was confirmed that △(x, y) of Examples was reduced, as compared with Comparative Examples.

Conversely, the polarizing plates of Comparative Example not satisfying Equation 1 and Equation 2 had a greater difference in visibility and color perception between the right and left sides than the polarizing plates of Examples. This can be confirmed from FIG. 4, FIG. 5 and FIG. 6. As shown in FIG. 4, a difference in color perception between right-side and left-side images was greater than that shown in FIG. 3. In addition, as shown in FIG. 5 and FIG. 6, it was confirmed that △(x, y) of Comparative Examples was greater than that of Examples.

It should be understood that various modifications, changes, alterations, and equivalent embodiments can be made by those skilled in the art without departing from the spirit and scope of the invention.

## Claims

1. A polarizing plate comprising: a polarizer; and a retardation layer stacked on one surface of the polarizer,

   wherein the retardation layer has an in-plane retardation of 0 nm to 10 nm and an out-of-plane retardation of -30 nm to -3 nm at a wavelength of 550 nm, and
   the polarizing plate has a light transmittance ratio of greater than 0.445 and less than 0.470, as calculated according to Equation 1, and a light transmittance ratio of greater than 0.710 and less than 0.730, as calculated according to Equation 2:

   [Equation 1]

   $$\text{Light transmittance ratio} = TS390/TS550$$

   [Equation 2]

   $$\text{Light transmittance ratio} = TS400/TS550$$

   (in Equation 1 and Equation 2,

   TS550 denotes a light transmittance (unit: %) of the polarizing plate at a wavelength of 550 nm,
   TS390 denotes a light transmittance (unit: %) of the polarizing plate at a wavelength of 390 nm, and
   TS400 denotes a light transmittance (unit: %) of the polarizing plate at a wavelength of 400 nm).

2. The polarizing plate as claimed in claim 1, wherein the polarizing plate has a light transmittance of 10% to 20% at a wavelength of 390 nm and a light transmittance of 25% to 35% at a wavelength of 400 nm.

3. The polarizing plate as claimed in claim 1, wherein the polarizing plate has a light transmittance ratio of greater than 0.795 and less than 0.805, as calculated according to Equation 3, and a light transmittance ratio of greater than 0.835 and less than 0.850, as calculated according to Equation 4:

   [Equation 3]

   $$\text{Light transmittance ratio} = TS410/TS550$$

   [Equation 4]

   $$\text{Light transmittance ratio} = TS420/TS550$$

   (in Equation 3 and Equation 4,

   TS550 denotes a light transmittance (unit: %) of the polarizing plate at a wavelength of 550 nm,
   TS410 denotes light transmittance (unit: %) of the polarizing plate at a wavelength of 410 nm, and
   TS420 denotes light transmittance (unit: %) of the polarizing plate at a wavelength of 420 nm).

4. The polarizing plate as claimed in claim 1, wherein the polarizing plate has a light transmittance of 33% to 35% at a wavelength of 410 nm and a light transmittance of 36% to 38% at a wavelength of 420 nm.

5. The polarizing plate as claimed in claim 1, wherein the retardation layer is a negative C layer or a positive C layer.

6. The polarizing plate as claimed in claim 1, wherein the retardation layer has a higher light transmittance at a wavelength of 390 nm, 400 nm, 410 nm, 420 nm, or 550 nm than the polarizer.

**7.** The polarizing plate as claimed in claim 1, wherein the retardation layer has a light transmittance of 45% to 62% at a wavelength of 390 nm, a light transmittance of 70% to 90% at a wavelength of 400 nm, a light transmittance of 75% to 95% at a wavelength of 410 nm, and a light transmittance of 75% to 95% at a wavelength of 420 nm.

**8.** The polarizing plate as claimed in claim 1, wherein the retardation layer comprises a film or coating layer containing a polymer with a positive inherent birefringence.

**9.** The polarizing plate as claimed in claim 1, wherein the retardation layer comprises triacetylcellulose (TAC), cyclic olefin polymer (COP), or cyclic olefin copolymer (COC).

**10.** The polarizing plate as claimed in claim 1, wherein the retardation layer has a thickness ratio of 90% or more with respect to a thickness of total retardation layers stacked on the lower surface of the polarizer.

**11.** The polarizing plate as claimed in claim 1, wherein a slow axis of the retardation layer is tilted at an angle of -5° to 5° with respect to a light absorption axis of the polarizer, when the light absorption axis of the polarizer is 0°.

**12.** The polarizing plate as claimed in claim 1, further comprising: a second protective layer stacked on the other surface of the polarizer.

**13.** The polarizing plate as claimed in claim 12, wherein the second protective layer has an in-plane retardation of 3,000 nm or more at a wavelength of 550 nm.

**14.** An optical display device comprising the polarizing plate as claimed in any one of claims 1 to 13.

【FIG. 1】

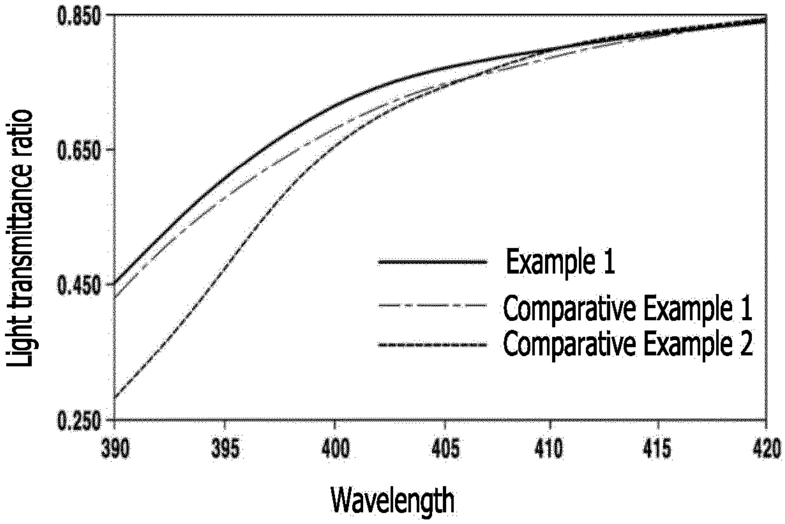
0.850
0.650
0.450
0.250
390
395
400
405
410
415
420
Wavelength
Light transmittance ratio
Example 1
Comparative Example 1
Comparative Example 2

【FIG. 2】

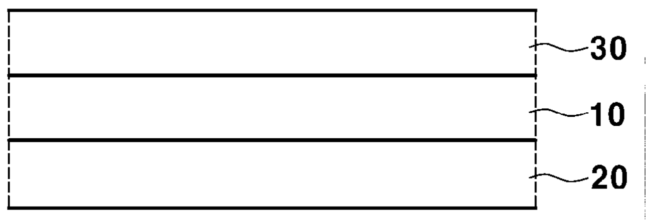

【FIG. 3】

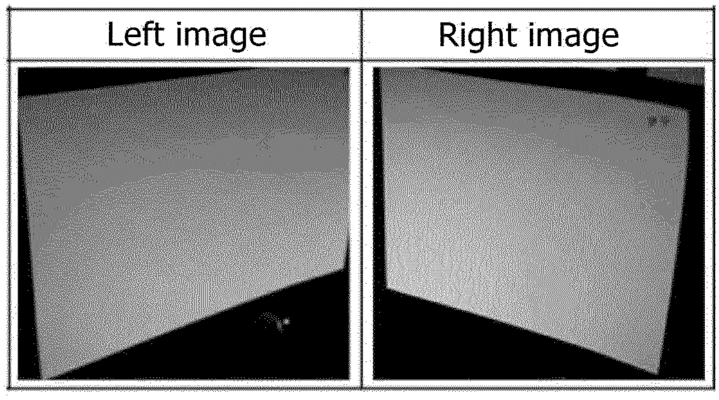

【FIG. 4】

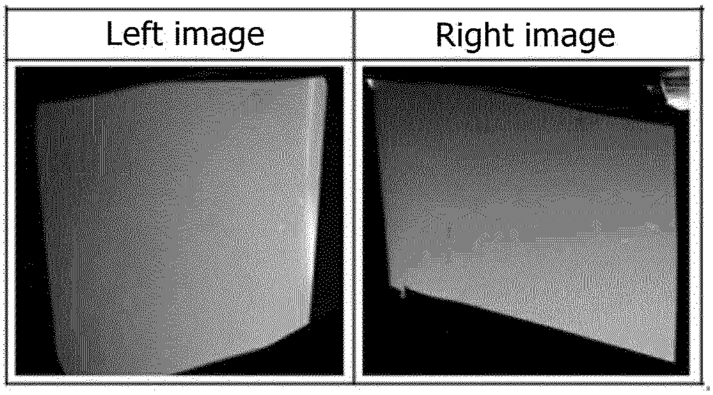

【FIG. 5】

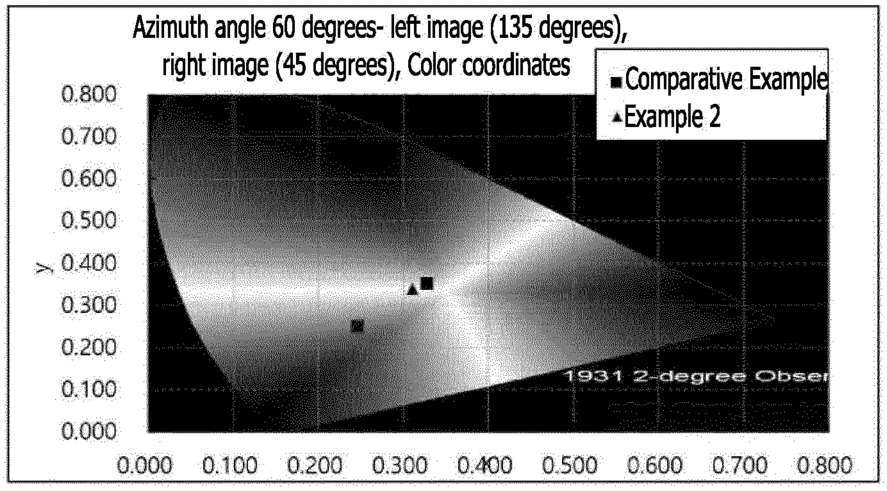
Azimuth angle 60 degrees- left image (135 degrees),
right image (45 degrees), Color coordinates
Comparative Example
Example 2
y
0.800
0.700
0.600
0.500
0.400
0.300
0.200
0.100
0.000
0.000
0.100
0.200
0.300
0.400
0.500
0.600
0.700
0.800
1931 2-degree Obser

【FIG. 6】

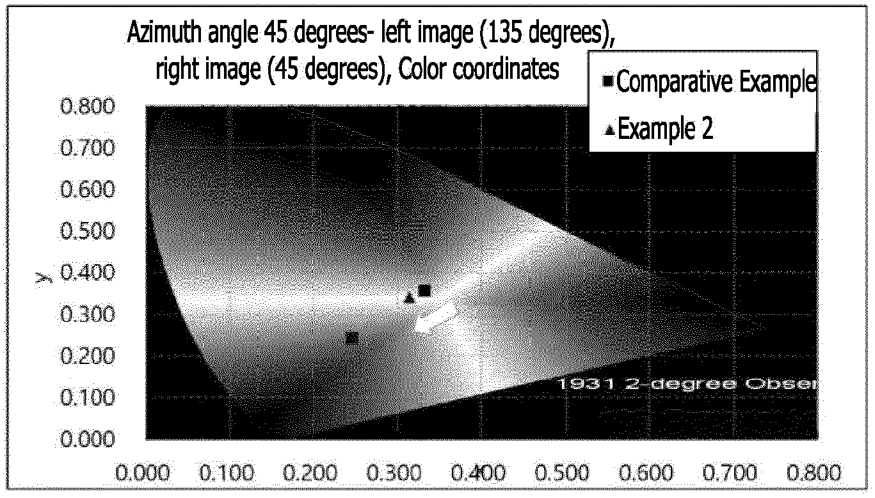
Azimuth angle 45 degrees- left image (135 degrees),
right image (45 degrees), Color coordinates
Comparative Example
Example 2
0.800
0.700
0.600
0.500
0.400
0.300
0.200
0.100
0.000
y
0.000
0.100
0.200
0.300
0.400
0.500
0.600
0.700
0.800
1931 2-degree Obser

## INTERNATIONAL SEARCH REPORT

International application No.
**PCT/KR2023/018960**

**A. CLASSIFICATION OF SUBJECT MATTER**

**G02B 5/30**(2006.01)i; **G02F 1/1335**(2006.01)i; **G02F 1/13363**(2006.01)i

According to International Patent Classification (IPC) or to both national classification and IPC

**B. FIELDS SEARCHED**

Minimum documentation searched (classification system followed by classification symbols)

G02B 5/30(2006.01); G02B 1/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 편광자(polarizer), 위상차(retardation), 파장(wavelength), 광-투과율(light-transmission)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0082442 A (SAMSUNG SDI CO., LTD.) 08 July 2020 (2020-07-08) See claims 1 and 8-9. | 1-14 |
| A | KR 10-2021-0077214 A (LG CHEM, LTD.) 25 June 2021 (2021-06-25) See paragraph [0112]. | 1-14 |
| A | KR 10-2022-0042033 A (SAMSUNG SDI CO., LTD.) 04 April 2022 (2022-04-04) See claims 1 and 10-11. | 1-14 |
| A | KR 10-2022-0134394 A (SAMSUNG SDI CO., LTD.) 05 October 2022 (2022-10-05) See claims 2 and 4. | 1-14 |
| A | KR 10-2022-0146387 A (SAMSUNG SDI CO., LTD.) 01 November 2022 (2022-11-01) See claim 3. | 1-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2024** | **07 March 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/018960**

| Patent document cited in search report | Publication date (day/month/year) | Patent family member(s) | Publication date (day/month/year) |
|---|---|---|---|
| KR 10-2020-0082442 A | 08 July 2020 | KR 10-2514153 B1 | 24 March 2023 |
| KR 10-2021-0077214 A | 25 June 2021 | None | |
| KR 10-2022-0042033 A | 04 April 2022 | None | |
| KR 10-2022-0134394 A | 05 October 2022 | CN 117120891 A | 24 November 2023 |
| | | WO 2022-203329 A1 | 29 September 2022 |
| KR 10-2022-0146387 A | 01 November 2022 | CN 113227852 A | 06 August 2021 |
| | | KR 10-2020-0081154 A | 07 July 2020 |
| | | KR 10-2457502 B1 | 21 October 2022 |
| | | US 2021-0405273 A1 | 30 December 2021 |
| | | WO 2020-138879 A1 | 02 July 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006251659 A